# EUROPÄISCHE PATENTSCHRIFT

(11) **EP 1 508 476 B1**
(45) Veröffentlichungstag und Bekanntmachung des Hinweises auf die Patenterteilung: **31.10.2007**
(21) Anmeldenummer: 04019242.9
(22) Anmeldetag: 13.08.2004
(51) Int. Cl.: B60Q 1/52, B62D 15/02

(54) **Fahrerassistenzsystem für Kraftfahrzeuge**
Drive assist system for motor vehicles
Système d'assistance à la conduite pour véhicules

(30) Priorität: 22.08.2003 DE 10338647
(43) Veröffentlichungstag der Anmeldung: 23.02.2005
(73) Patentinhaber: AUDI AG, 85045 Ingolstadt (DE)
(72) Erfinder: Popken, Markus, 85139 Wettstetten (DE)
(74) Vertreter: Thielmann, Frank

(56) Entgegenhaltungen:
- DE-A1- 19 944 067
- DE-C1- 4 317 831
- US-A- 6 076 948

## Beschreibung

Die Erfindung betrifft ein Fahrerassistenzsystem, insbesondere einen Spurwechselassistenten, das wenigstens einen Sensor zur Überwachung des seitlichen und/oder rückwärtigen Fahrzeugumfelds aufweist und im Falle eines erfassten Fahrzeugs über ein optisches Anzeigemittel ein Informationssignal und bei einer drohenden gefährlichen Verkehrssituation ein Warnsignal ausgibt.

Ein derartiges Fahrerassistenzsystem wird in der DE 198 35 601 A1 beschrieben. Das Fahrerassistenzsystem gibt dem Fahrer einen Hinweis, wenn sich in dem überwachten Raum neben oder hinter dem Fahrzeug wenigstens ein anderes Fahrzeug in einem kritischen Abstand befindet. Dadurch soll der Fahrer schon vor der Betätigung des Fahrtrichtungsanzeigers visuell erkennen können, ob ein Fahrspurwechsel gefahrlos möglich ist. Stellt das System fest, dass der Fahrer einen Fahrspurwechsel beabsichtigt, wird zusätzlich ein akustischer Warnhinweis ausgegeben. Ein derartiges System wird in der DE 4 317 831 gemäß dem Oberbegriff des Anspruchs 1 beschrieben.

Obwohl ein derartiges Fahrerassistenzsystem einen Beitrag zur Verbesserung der Verkehrssicherheit liefert, werden die ununterbrochen ausgegebenen Informationen teilweise als störend empfunden. Jedes Mal, wenn der Sensor ein sich von hinten näherndes Fahrzeug erfasst hat, wird zumindest eine optische Information ausgegeben, die der Fahrer in den allermeisten Fällen jedoch gar nicht benötigt, da er nicht die Absicht hat, die Spur zu wechseln. Dementsprechend will der Fahrer eine ihm angebotene Information nicht in jedem Fall wahrnehmen.

Der Erfindung liegt daher das Problem zugrunde, ein Fahrerassistenzsystem, insbesondere einen Spurwechselassistenten, zu schaffen, das besser an die Bedürfnisse des Fahrers angepasst ist.

Zur Lösung dieses Problems ist bei einem Fahrerassistenzsystem der eingangs genannten Art erfindungsgemäß vorgesehen, dass das Warnsignal oberhalb der Wahrnehmungsschwelle des Fahrers und das Informationssignal unterhalb der Wahrnehmungsschwelle liegt und erst nach einer Handlung des Fahrers wahrnehmbar ist.

Erfindungsgemäß ist vorgesehen, dass der Fahrer von dem Fahrerassistenzsystem informiert wird, wenn sich ein Fahrzeug in einem kritischen Bereich hinter oder neben dem Fahrzeug befindet und der Fahrer keinen Spurwechsel beabsichtigt, ankündigt oder durchführt. Der Fahrer wird jedoch gewarnt, wenn sich ein Fahrzeug in dem kritischen Bereich befindet und der Fahrer gleichzeitig einen Spurwechsel angekündigt hat oder durchführt. Da das Informationssignal unterhalb und das Warnsignal oberhalb der Wahrnehmungsschwelle des Fahrers liegt, unterscheidet sich die Information schon dadurch deutlich von der Warnung. Die Information ist weniger auffällig, so dass sie den Fahrer nicht stört, wenn er die Information nicht benötigt. Demgegenüber ist das Warnsignal dringlicher, es liegt oberhalb der Wahrnehmungsschwelle des Fahrers und wird sofort bemerkt. Durch das erfindungsgemäße Fahrerassistenzsystem wird die Aufmerksamkeit des Fahrers nur erregt, wenn es tatsächlich erforderlich ist, um eine gefährliche Verkehrssituation zu vermeiden. In der übrigen Zeit nimmt der Fahrer das Informationssignal nicht wahr, da es unterhalb seiner Wahrnehmungsschwelle liegt. Um das Informationssignal wahrnehmen zu können, muss der Fahrer eine weitere Handlung vornehmen, z.B. seine Blickrichtung ändern.

Gemäß einer Weiterbildung des Erfindungsgedankens kann es vorgesehen sein, dass das optische Anzeigemittel an oder in einem Rückspiegel des Fahrzeugs angeordnet ist. Auf diese Weise kann neben der im Spiegel zu sehenden Verkehrssituation hinter dem Fahrzeug gleichzeitig der Gefährdungsgrad erfasst werden, der an dem Anzeigemittel optisch dargestellt wird. Auf diese Weise können alle relevanten Informationen mit einem einzigen Blick auf den Rückspiegel erfasst werden. Alternativ kann das Anzeigemittel auch im Fahrzeuginneren im Bereich des Spiegeldreiecks oder der A-Säule angeordnet sein. Diese Ausgestaltung entspricht den aktuellen Zulassungsvorschriften.

Es wird besonders bevorzugt, dass das Informationssignal bei dem erfindungsgemäßen Fahrerassistenzsystem so ausgebildet ist, dass es von einem nach vorne schauenden Fahrer nicht wahrgenommen wird. Während der normalen Fahrt blickt der Fahrer auf die vor ihm liegende Straße und den vorausfahrenden Verkehr. Wenn er das Informationssignal sehen möchte, ändert er seine Blickrichtung, so dass er das optische Anzeigemittel sieht. Während der normalen Geradeausfahrt wird er jedoch nicht von Informationssignalen gestört, da diese unterhalb seiner Wahrnehmungsschwelle liegen.

Bei dem erfindungsgemäßen Fahrerassistenzsystem ist das Warnsignal so ausgebildet, dass es von einem nach vorne schauenden Fahrer wahrgenommen wird. Das von dem Anzeigemittel ausgegebene Warnsignal liegt oberhalb der Wahrnehmungsschwelle des Fahrers, so dass er es auch dann bemerkt, wenn er keinen direkten Blickkontakt zum Anzeigemittel hat. Auf diese Weise wird sichergestellt, dass der Fahrer vor gefährlichen Verkehrssituationen rechtzeitig gewarnt wird.

Um die Erkennbarkeit des Anzeigemittels weiter zu erhöhen, kann es vorgesehen sein, dass das Warnsignal eine größere Helligkeit als das Informationssignal aufweist. Die Helligkeit des Informationssignals ist dabei unterschwellig bezüglich der Wahrnehmungsschwelle des Fahrers, wenn er nicht auf das Anzeigemittel sieht. Die Helligkeit des Warnsignals ist überschwellig, so dass es auch dann die Aufmerksamkeit des Fahrers auf sich zieht, wenn er den Blick nicht auf das Anzeigemittel gerichtet hat.

Besonders bewährt haben sich Fahrerassistenzsysteme, bei denen das Anzeigemittel eine oder mehrere Leuchtdioden aufweist. Mehrere Leuchtdioden können in einer Reihe oder an verschiedenen Stellen im Bereich des Rückspiegels angeordnet sein, z.B. zwischen der Spiegelfläche und der Befestigung des Spiegels an der Fahrzeugkarosserie und/oder im Bereich der Einfassung der Spiegelfläche und/oder hinter der Spiegelfläche. Alternativ können die Leuchtdioden auch im Fahrzeuginneren im Bereich des Spiegeldreiecks oder der A-Säule angeordnet sein.

Bei einer alternativen Ausgestaltung der Erfindung kann es vorgesehen sein, dass das Anzeigemittel eine vorzugsweise beleuchtete LCD-Anzeige aufweist. Derartige Anzeigen zeichnen sich durch einen besonders niedrigen Stromverbrauch aus. Durch die zusätzliche Beleuchtung sind sie bei unterschiedlichen Umgebungslichtverhältnissen gut ablesbar. Die Beleuchtung des Anzeigemittels kann auch durch einen Lichtleiter erfolgen. Grundsätzlich sind alle Lichtquellen geeignet, die das Ablesen des Informations- und Warnsignals bei unterschiedlichen Umgebungslichtverhältnissen erlauben.

Bei dem erfindungsgemäßen Fahrerassistenzsystem kann auch vorgesehen sein, dass die Helligkeit und/oder der Kontrast und/oder die Einschaltdauer und/oder die Kontur des Anzeigemittels steuerbar ist bzw. sind. Vorzugsweise ist die Helligkeit des Anzeigemittels mittels Pulsbreitenmodulation steuerbar. Die Kontur des Anzeigemittels kann gesteuert werden, indem nur ein Teil der Anzeige beleuchtet wird. Durch entsprechende Ansteuerung des Anzeigemittels kann die Kontur auch z.B. durch abwechselndes Ein- und Ausschalten des oberen und unteren Teils verändert werden, um eine besonders auffällige Wechsellichtanzeige zu erhalten.

Es ist zweckmäßig, wenn die Helligkeit des Anzeigemittels des erfindungsgemäßen Fahrerassistenzsystems in Abhängigkeit der von einem Sensor erfassten Umgebungshelligkeit steuerbar ist. Die Umgebungshelligkeit, die auch als Umgebungsleuchtdichte bezeichnet wird, unterliegt beim Fahrbetrieb starken Schwankungen, insbesondere muss die Helligkeit des Anzeigemittels an die unterschiedlichen Lichtverhältnisse bei Tag und bei Nacht angepasst werden. Auf diese Weise wird sichergestellt, dass das Informations- oder Warnsignal bei allen Bedingungen vom Fahrer erfasst werden kann, andererseits wird verhindert, dass der Fahrer geblendet wird. Durch die Nachregelung der Helligkeit in Abhängigkeit der Umgebungsleuchtdichte kann die Wahrnehmungsschwelle angepasst werden. Es muss gewährleistet sein, dass die überschwellige oder unterschwellige Helligkeit des Anzeigemittels jeweils passend festgelegt wird.

Mit besonderem Vorteil kann ein Regensensor oder ein Helligkeitssensor für die Beleuchtung des Kombiinstruments als Sensor zur Erfassung der Umgebungshelligkeit verwendet werden. Die Verwendung dieser ohnehin vorhandenen Sensoren ist besonders einfach, da keine zusätzlichen Bauteile benötigt werden.

In weiterer Ausgestaltung der Erfindung kann ein Mittel zum Erfassen der Sitzposition des Fahrers vorgesehen sein, wobei die Helligkeit des Anzeigemittels in Abhängigkeit der erfassten Position steuerbar ist. Das Anzeigemittel ist vorzugsweise ortsfest im Bereich eines Außenspiegels angeordnet. Jedes Anzeigemittel hat einen bestimmten Winkelbereich, innerhalb dem Lichtsignale vom Fahrer optimal erfasst werden können. Sitzt der Fahrer jedoch besonders weit hinten oder vorne, so ändert sich seine Wahrnehmung der von dem Anzeigemittel ausgegebenen Informations- und Warnsignale. Um zu erreichen, dass die Signale vom Fahrer ohne Berücksichtigung der Sitzposition immer gleich wahrgenommen werden, wird die Sitzposition des Fahrers erfasst und das Anzeigemittel entsprechend gesteuert. Es kann daher beispielsweise erforderlich sein, die Leuchtstärke zu erhöhen, wenn die Sitzposition des Fahrers stark von der Normalposition abweicht.

Alternativ oder zusätzlich kann es auch vorgesehen sein, dass Mittel zum Erfassen der Kopfposition und/oder der Blickrichtung des Fahrers vorgesehen sind und das Anzeigemittel in Abhängigkeit der erfassten Kopfposition bzw. der Blickrichtung steuerbar ist. Die Erfassung der Kopfposition liefert noch bessere Hinweise auf das Sichtfeld des Fahrers, so dass die Lichtsignale des Anzeigemittels entsprechend angepasst werden können.

Um zu verhindern, dass es beim Ein- und Ausschalten des Anzeigemittels zu einem unerwünschten Überschreiten der Wahrnehmungsschwelle kommt, insbesondere wenn ein Informationssignal abgegeben wird, kann es erfindungsgemäß vorgesehen sein, dass das Ein- und Ausschalten des Anzeigemittels stufenlos erfolgt. Dadurch ergibt sich ein vergleichsweise sanftes Einund Ausschalten, das vom Fahrers nicht als Kontrastwechsel wahrgenommen wird.

Vorzugsweise ist das Warnsignal als Blinkimpuls ausgebildet. Blinkimpulse werden leichter wahrgenommen, so dass die gewünschte Wirkung, nämlich die Aufmerksamkeit des Fahrers auf sich zu ziehen, erreicht wird. In weiterer Ausgestaltung der Erfindung kann es vorgesehen sein, dass der erste Blinkimpuls eines Warnsignals heller als der zweite und gegebenenfalls die Weiteren Warnsignale ist. Der erste helle Blinkimpuls überschreitet die Wahrnehmungsschwelle des Fahrers, so dass er seinen Blick auf das Anzeigemittel richtet. Um den Fahrer nicht zu blenden, wird die Helligkeit des zweiten Warnsignals und der Weiteren Warnsignale verringert, d.h. das Warnsignal wird immer dunkler. Auf diese Weise werden an den Fahrer Blinkimpulse ausgegeben, deren Helligkeit und Intensität allmählich abnimmt.

Es ist zweckmäßig, dass der das Anzeigemittel umgebende Bereich eine einheitliche, vorzugsweise dunkle Farbe aufweist, um den Kontrast und die Erkennbarkeit der Signale zu erhöhen. Dabei ist es von Vorteil, dass der dunkle Bereich bei sämtlichen unterschiedlichen Fahrzeuglackierungen einsetzbar ist. Alternativ oder zusätzlich kann es bei dem erfindungsgemäßen Fahrerassistenzsystem vorgesehen sein, dass die Helligkeit des Anzeigemittels in Abhängigkeit der Farbe der Fahrzeuglackierung steuerbar ist. Dementsprechend wird jeder Fahrzeugfarbe ein passender Helligkeitswert zugeordnet, der eine optimale Erkennbarkeit des Informations- und Warnsignals gewährleistet.

Die Erfindung betrifft auch ein Kraftfahrzeug. Erfindungsgemäß weist das Kraftfahrzeug ein Fahrerassistenzsystem der beschriebenen Art auf.

Weitere Vorteile und Einzelheiten der Erfindung werden anhand eines besonders geeigneten Ausführungsbeispiels unter Bezugnahme auf die Figuren beschrieben. Die Figuren sind schematische Darstellungen und zeigen:
- Fig. 1: ein Fahrzeug mit einem erfindungsgemäßen Fahrerassistenzsystem in einer Draufsicht;
- Fig. 2: einen Außenspiegel mit einem optischen Anzeigemittel zum Ausgeben eines Informations- oder Warnsignals;
- Fig. 3: den Verlauf eines Warnsignals mit sich ändernder Leuchtstärke; und
- Fig. 4: den Verlauf eines stufenlos ein- und ausgeschalteten Informationssignals.

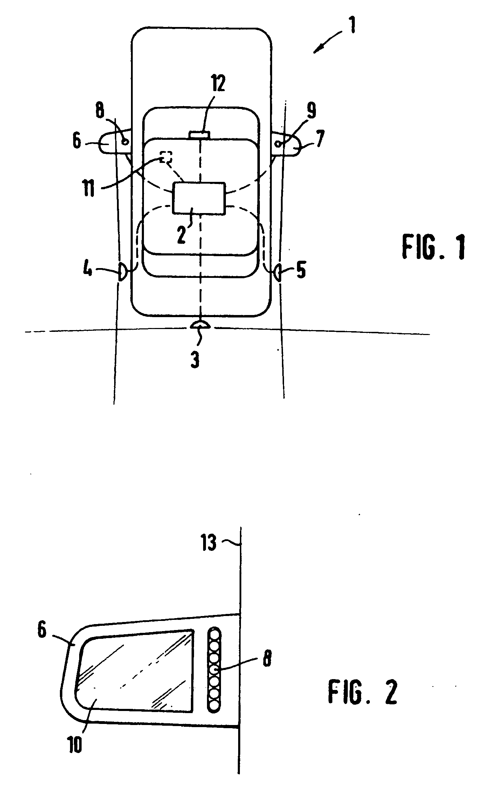

Fig. 1 zeigt ein Fahrzeug 1 mit einem Fahrerassistenzsystem, das in dem dargestellten Ausführungsbeispiel als Spurwechselassistent ausgebildet ist. Der Spurwechselassistent umfasst ein Steuergerät 2 zur Datenverarbeitung und zur Kommunikation mit anderen Steuergeräten des Fahrzeugs 1. An das Steuergerät 2 sind drei Sensoren 3, 4, 5 angeschlossen, die auf elektronischem Weg ein Bild des Fahrzeugumfelds hinter und neben dem Fahrzeug 1 aufnehmen. Dadurch können Fahrzeuge erfasst werden, die sich von hinten nähern sowie Fahrzeuge, die sich im sogenannten toten Winkel aufhalten. In dem Steuergerät 2 des Spurwechselassistenten ist ein Algorithmus implementiert, der auf der Basis der erfassten Sensordaten laufend den Gefährdungsgrad für den Fall eines sofortigen Spurwechsels berechnet. Dem System ist es daher jederzeit bekannt, ob ein möglicher Spurwechsel kritisch wäre. Ein Spurwechsel wird dann als kritisch eingeschätzt, wenn er zu einer gefährlichen Situation führen würde, beispielsweise wenn sich ein anderes Fahrzeug mit einer zu hohen Geschwindigkeit nähert oder wenn die Lücke zum Einscheren nicht ausreicht. Die Spurwechselabsicht des Fahrers kann anhand eines gesetzten Blinkers von dem Steuergerät 2 des Spurwechselassistenten erkannt werden. Ein erfasstes Fahrzeug löst ein Informationssignal aus, das an einem Anzeigemittel ausgegeben wird.

Das in Fig. 1 dargestellte Fahrzeug 1 umfasst zwei als Leuchtdioden 8, 9 ausgebildete Anzeigemittel, die in linken und rechten Außenspiegeln 6, 7 angeordnet sind.

Wie am besten in Fig. 2 zu erkennen ist, sind die Leuchtdioden 8, 9 an den Außenspiegeln 6, 7 zwischen der Spiegelfläche 10 und der Fahrzeugaußenseite 13 im Bereich der Spiegelhalterung angeordnet. Die Leuchtdioden 8, 9 sind an das Steuergerät 2 des Spurwechselassistenten angeschlossen und werden durch das Steuergerät gesteuert, das heißt ein- und ausgeschaltet. Die Leuchtdioden 8, 9 bestehen aus mehreren einzelnen Leuchtdioden, die nebeneinander angeordnet sind, so dass sie im eingeschalteten Zustand einen beleuchteten Balken bilden. Anders als in Fig. 2 dargestellt kann der die Leuchtdiode 8 umgebende Bereich zur Erhöhung des Kontrasts eine einheitliche dunkle Farbe aufweisen. Ferner ist die Helligkeit des Anzeigemittels in Abhängigkeit von der Farbe der Fahrzeuglackierung steuerbar. Zu diesem Zweck ist die Fahrzeugfarbe in dem Steuergerät 2 hinterlegt, so dass die dieser Fahrzeugfarbe zugeordnete Helligkeit gewählt wird.

Wenn ein sich näherndes Fahrzeug von den Sensoren 3, 4, 5 erfasst wird, wird über die Leuchtdioden 8, 9 ein Informationssignal als Dauerlicht oder Blinksignal ausgegeben. Es kann auch vorgesehen sein, dass über die Leuchtdiode 8 des linken Außenspiegels 6 nur solche Fahrzeuge angekündigt werden, die sich hinter oder links neben dem Fahrzeug befinden, wohingegen Fahrzeuge, die sich rechts vom Fahrzeug 1 oder hinter ihm befinden, durch die Leuchtdiode 9 des rechten Außenspiegels 7 angezeigt werden.

Es ist nicht notwendig, dass sämtliche Leuchtdioden 8, 9 des Anzeigemittels eingeschaltet werden. Die oberen und unteren Leuchtdioden können auch abwechselnd ein- und ausgeschaltet werden, um eine Wechsellichtanzeige zu erzeugen. Andere Ausführungsformen des Anzeigemittels können eine Leuchtdiodenmatrix aufweisen, mittels der Zeichen oder Symbole darstellbar sind, z.B. ein blinkendes "Warndreieck".

Das von den Leuchtdioden 8, 9 abgegebene Informationssignal liegt unterhalb der Wahrnehmungsschwelle des Fahrers. Der Fahrer nimmt das Informationssignal während des normalen Fahrbetriebs nicht bewusst wahr, er wird daher nicht von diesen für ihn nicht relevanten Informationen abgelenkt. Wenn er jedoch die Absicht hat die Fahrspur zu wechseln, kann er seinen Blick auf einen der Spiegel 6, 7 richten und sich unmittelbar über die Situation hinter seinem Fahrzeug informieren. Wenn der Fahrer einen Spurwechsel durch die Betätigung des Blinkers oder einen Lenkradeinschlag angekündigt hat und wenn sich gleichzeitig ein Fahrzeug in einer kritischen Entfernung hinter oder neben dem Fahrzeug 1 befindet, wird ein Warnsignal durch die Leuchtdioden 8 oder 9 oder beide ausgegeben. Dieses Warnsignal liegt oberhalb der Wahrnehmungsschwelle des Fahrers, so dass es auf jeden Fall bemerkt wird. Der Fahrer bemerkt das Warnsignal auch dann, wenn sein Blick nach vorne auf die vor ihm liegende Fahrbahn oder vorausfahrende Fahrzeuge gerichtet ist. Das Warnsignal ist so ausgebildet, dass der Fahrer nicht geblendet wird, dies ist insbesondere bei Nachtfahrten wichtig. Anders ausgedrückt ist das Informationssignal dunkler als das Warnsignal. Das Informationssignal ist unterschwellig in Bezug auf die vorhandene Leuchtdichte der Umgebung, das heißt es weist eine geringere Helligkeit als die Umgebung auf.

Bei dem dargestellten Ausführungsbeispiel wird die Helligkeit der Signale in Abhängigkeit von der Fahrerposition gesteuert. Dazu ist an einem in Fig. 1 nicht dargestellten Fahrersitz ein Sensor 11 angeordnet, der die Sitzposition des Fahrers zwischen den Extremlagen "hinterer Anschlag" und "vorderer Anschlag" erfasst und diese erfasste Position an das Steuergerät 2 übermittelt. Da die Leuchtdioden 8, 9 ortsfest im Bereich der Rückspiegel 6, 7 angeordnet sind, kann eine näherungsweise konstante Helligkeit bei unterschiedlichen Sitzpositionen des Fahrers erzielt werden, indem die Helligkeit an die Sitzposition angepasst wird. Es ist auch denkbar, die Position des Kopfes des Fahrers oder die Blickrichtung seiner Augen über einen anderen Sensor wie eine Kamera zu erfassen, so dass die Helligkeit des Anzeigeelements genau auf den tatsächlichen Blickwinkel des Fahrers abgestimmt werden kann.

Wenn die Signalleuchtdichte, das heißt die Leuchtstärke des Signals, so eingestellt ist, dass sie bei einem Winkel von z.B. 50° zwischen der Blickrichtung des Fahrers und der Verbindungslinie zwischen der Leuchtdiode und dem Auge des Fahrers optimal überschwellig aber nicht blendend ist, so wird der Fahrer jedoch bei einem Winkel von 0° geblendet, wenn er den Blick direkt auf die Leuchtdiode richtet. Dieses Problem tritt insbesondere bei niedrigen Umgebungsleuchtdichten auf, z.B. bei Nachtfahrten. Das Warnsignal soll jedoch vor allem bei unaufmerksamen Fahrern wirksam werden, das heißt bei solchen Fahrern, die keinen direkten Blickkontakt zu der im Außenspiegel angeordneten Leuchtdiode haben. Zu diesem Zweck kann die Leuchtdichte oder Leuchtstärke der einzelnen Blinkimpulse geändert werden.

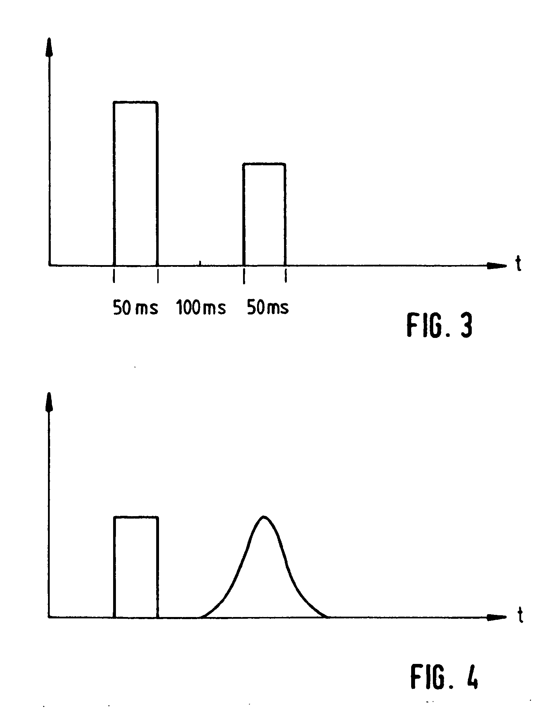

Fig. 3 zeigt den Verlauf eines Warnsignals mit sich ändernder Leuchtstärke. Auf der Abszisse ist die Zeit aufgetragen, auf der Ordinate die Leuchtdichte einer Leuchtdiode. Das erste Blinksignal dauert 50 ms und wird mit optimal überschwelliger Leuchtdichte für peripheres Sehen abgestrahlt. Dieses Signal wird auch bemerkt, wenn der Fahrer nach vorne blickt. Nach einer Pause von 100 ms folgt ein zweites Blinksignal mit einer verringerten Leuchtdichte. Der zweite Blinkimpuls ist etwas dunkler, so dass er den Fahrer auch bei direkter Blickzuwendung nicht blendet. Das Warnsignal ist daher klar wahrnehmbar, ohne den Fahrer zu stören.

Fig. 4 zeigt den Verlauf eines stufenlos ein- und ausgeschalteten Informationssignals. Weil der Kontrast bzw. der Konturwechsel des Anzeigemittels beim sofortigen Ein- und Ausschalten mit senkrechten Flanken sehr groß ist, kann es auch beim Informationssignal zum Überschreiten der Wahrnehmungsschwelle kommen. Daher wird die Wahrnehmung des Kontrastwechsels durch sanftes Ein- und Ausschalten unterdrückt. Das in Fig. 4 links dargestellte Blinksignal ist ein herkömmliches Blinksignal mit senkrechten Flanken, bei dem es leicht zum Überschreiten der Wahrnehmungsschwelle kommen kann. Das in Fig. 4 rechts dargestellte Signal weist einen näherungsweise sinusförmigen Verlauf auf und liegt unterhalb der Wahrnehmungsschwelle des Fahrers.

Um die Helligkeit der Umgebung, das heißt die Umgebungsleuchtdichte zu erfassen, ist ein Helligkeitssensor 12 vorgesehen, bei dem es sich um den Regensensor des Fahrzeugs 1 handelt.

## Patentansprüche

1. Fahrerassistenzsystem, insbesondere Spurwechselassistent, das wenigstens einen Sensor zur Überwachung des seitlichen und/oder rückwärtigen Fahrzeugumfelds aufweist und im Falle eines erfassten Fahrzeugs über ein optisches Anzeigemittel ein Informationssignal und bei einer drohenden gefährlichen Verkehrssituation ein Warnsignal ausgibt,
**dadurch gekennzeichnet,**
**dass** das Warnsignal oberhalb der Wahrnehmungsschwelle des Fahrers und das Informationssignal unterhalb der Wahrnehmungsschwelle liegt und erst nach einer Handlung des Fahrers wahrnehmbar ist.

2. Fahrerassistenzsystem nach Anspruch 1,
**dadurch gekennzeichnet,**
**dass** das optische Anzeigemittel an oder in einem Rückspiegel (6, 7) des Fahrzeugs (1) und/oder im Fahrzeuginnenraum im Bereich des Spiegeldreiecks oder der A-Säule angeordnet ist.

3. Fahrerassistenzsystem nach Anspruch 1 oder 2,
**dadurch gekennzeichnet,**
**dass** das Informationssignal so ausgebildet ist, dass es von einem nach vorne schauenden Fahrer nicht wahrgenommen wird.

4. Fahrerassistenzsystem nach einem der vorangehenden Ansprüche,
**dadurch gekennzeichnet,**
**dass** das Warnsignal so ausgebildet ist, dass es von einem nach vorn schauenden Fahrer wahrgenommen wird.

5. Fahrerassistenzsystem nach einem der vorangehenden Ansprüche,
**dadurch gekennzeichnet,**
**dass** das Warnsignal eine größere Helligkeit als das Informationssignal aufweist.

6. Fahrerassistenzsystem nach einem der vorangehenden Ansprüche,
**dadurch gekennzeichnet,**
**dass** das Anzeigemittel eine oder mehrere Leuchtdioden (8, 9) aufweist.

7. Fahrerassistenzsystem nach einem der vorangehenden Ansprüche,
**dadurch gekennzeichnet,**
**dass** das Anzeigemittel eine vorzugsweise beleuchtete LCD-Anzeige aufweist.

8. Fahrerassistenzsystem nach einem der vorangehenden Ansprüche,
**dadurch gekennzeichnet,**
**dass** das Anzeigemittel einen Lichtleiter aufweist.

9. Fahrerassistenzsystem nach einem der vorangehenden Ansprüche,
**dadurch gekennzeichnet,**
**dass** die Helligkeit und/oder der Kontrast und/oder die Einschaltdauer und/oder die Kontur des Anzeigemittels steuerbar ist bzw. sind.

10. Fahrerassistenzsystem nach einem der vorangehenden Ansprüche,
**dadurch gekennzeichnet,**
**dass** die Helligkeit des Anzeigemittels mittels Pulsbreitenmodulation steuerbar ist.

11. Fahrerassistenzsystem nach einem der vorangehenden Ansprüche,
**dadurch gekennzeichnet,**
**dass** das Anzeigemittel zur Steuerung der Kontur der Anzeige nur teilweise beleuchtet wird

12. Fahrerassistenzsystem nach einem der vorangehenden Ansprüche,
**dadurch gekennzeichnet,**
**dass** die Helligkeit des Anzeigemittels in Abhängigkeit der von einem Sensor (12) erfassten Umgebungshelligkeit steuerbar ist.

13. Fahrerassistenzsystem nach Anspruch 12,
**dadurch gekennzeichnet,**
**dass** der Sensor (12) für die Erfassung der Umgebungshelligkeit ein Regensensor oder ein Helligkeitssensor für die Beleuchtung des Kombiinstruments ist.

14. Fahrerassistenzsystem nach einem der vorangehenden Ansprüche,
**dadurch gekennzeichnet,**
**dass** Mittel zum Erfassen der Sitzposition des Fahrers vorgesehen sind und die Helligkeit des Anzeigemittels in Abhängigkeit der erfassten Position steuerbar ist.

15. Fahrerassistenzsystem nach einem der vorangehenden Ansprüche,
**dadurch gekennzeichnet,**
**dass** Mittel zum Erfassen der Kopfposition und/oder der Blickrichtung des Fahrers vorgesehen sind und das Anzeigemittel in Abhängigkeit der erfassten Kopfposition bzw. der Blickrichtung steuerbar ist.

16. Fahrerassistenzsystem nach einem der vorangehenden Ansprüche,
**dadurch gekennzeichnet,**
**dass** das Anzeigemittel stufenlos ein- und/oder ausschaltbar ist.

17. Fahrerassistenzsystem nach einem der vorangehenden Ansprüche,
**dadurch gekennzeichnet,**
**dass** das Warnsignal als Blinkimpuls ausgebildet ist.

18. Fahrerassistenzsystem nach Anspruch 17,
**dadurch gekennzeichnet,**
**dass** der erste Blinkimpuls eines Warnsignals heller als der zweite und gegebenenfalls die Weiteren Blinkimpulse ist.

19. Fahrerassistenzsystem nach einem der vorangehenden Ansprüche,
**dadurch gekennzeichnet,**
**dass** der das Anzeigemittel umgebende Bereich eine einheitliche, vorzugsweise dunkle Farbe aufweist.

20. Fahrerassistenzsystem nach einem der vorangehenden Ansprüche,
**dadurch gekennzeichnet,**
**dass** die Helligkeit des Anzeigemittels in Abhängigkeit von der Farbe der Fahrzeuglackierung steuerbar ist.

21. Kraftfahrzeug,
**dadurch gekennzeichnet,**
**dass** es ein Fahrerassistenzsystem nach einem der vorangehenden Ansprüche aufweist.

## Claims

1. Driver assistance system, especially a lane changing assistant, which has at least one sensor for monitoring the area surrounding the vehicle sideways of and/or behind the vehicle, and which, in the event a vehicle is detected, emits an information signal via an optical display device, and if a dangerous traffic situations threatens emits a warning signal, **characterised in that** the warning signal is above the driver's perception threshold, and the information signal is below the perception threshold and can be perceived only after an action on the part of the driver.

2. Driver assistance system according to claim 1, **characterised in that** the optical display device is arranged on or in a rearward looking mirror (6, 7) of the vehicle (1) and/or in the vehicle interior in the region of the mirror triangle or of the A-pillar.

3. Driver assistance system according to claim 1 or 2, **characterised in that** the information signal is so arranged that it is not perceived by a driver looking ahead.

4. Driver assistance system according to one of the preceding claims, **characterised in that** the warning signal is so arranged that it is perceived by a driver looking ahead.

5. Driver assistance system according to one of the preceding claims, **characterised in that** the warning signal has greater brightness than the information signal.

6. Driver assistance system according to one of the preceding claims, **characterised in that** the display device has one or more light emitting diodes (8, 9).

7. Driver assistance system according to one of the preceding claims, **characterised in that** the display device has a preferably illuminated LCD display.

8. Driver assistance system according to one of the preceding claims, **characterised in that** the display device has a fibre optic light guide.

9. Driver assistance system according to one of the preceding claims, **characterised in that** the brightness and/or the contrast and/or the switched-on duration and/or the contour of the display device can be controlled.

10. Driver assistance system according to one of the preceding claims, **characterised in that** the brightness of the display device can be controlled by means of pulse width modulation.

11. Driver assistance system according to one of the preceding claims, **characterised in that** the display device is illuminated only in part for controlling the contour of the display.

12. Driver assistance system according to one of the preceding claims, **characterised in that** the brightness of the display device can be controlled in dependence on the ambient brightness detected by a sensor (12).

13. Driver assistance system according to claim 12, **characterised in that** the sensor (12) for detecting the ambient brightness is a rainfall sensor or a brightness sensor for the illumination of the instrument cluster.

14. Driver assistance system according to one of the preceding claims, **characterised in that** means are provided for detecting the driver's seat position and the brightness of the display device can be controlled in dependence on the detected position.

15. Driver assistance system according to one of the preceding claims, **characterised in that** means are provided for detecting the position of the driver's head and/or his viewing direction, and the display device can be controlled in dependence on the detected position of the head or of the viewing direction, respectively.

16. Driver assistance system according to one of the preceding claims, **characterised in that** the display device can be switched on and/or off steplessly.

17. Driver assistance system according to one of the preceding claims, **characterised in that** the warning signal is arranged as a flash pulse.

18. Driver assistance system according to claim 17, **characterised in that** the first flash pulse of a warning signal is brighter than the second and subsequent flash pulses if any.

19. Driver assistance system according to one of the preceding claims, **characterised in that** the region surrounding the display device is of uniform, preferably dark, colour.

20. Driver assistance system according to one of the preceding claims, **characterised in that** the brightness of the display device can be controlled in dependence on the colour of the vehicle body finish.

21. Motor vehicle **characterised in that** it has a driver assistance system according to one of the preceding claims.

## Revendications

1. Système d'assistance à la conduite, en particulier un assistant de changement de voie, présentant au moins un capteur pour la surveillance de l'environnement latéral et / ou arrière du véhicule, un signal d'information étant émis dans le cas où un véhicule est détecté via un moyen d'affichage optique et un signal d'alarme étant émis dans le cas d'une situation du trafic risquant d'être dangereuse,
**caractérisé en ce que**
le signal d'alarme se situe en dessus du seuil de perception du conducteur et le signal d'information en dessous du seuil de perception et le premier n'est perceptible qu'après une action du conducteur.

2. Système d'assistance à la conduite selon la revendication 1
**caractérisé en ce que**
le moyen d'affichage optique est disposé sur ou dans un rétroviseur extérieur (6, 7) du véhicule (1) et / ou à l'intérieur du véhicule dans le secteur du triangle à miroir ou du montant A.

3. Système d'assistance à la conduite selon la revendication 1 ou 2,
**caractérisé en ce que**
le signal d'information est développé de sorte qu'il n'est pas perçu par un conducteur regardant vers l'avant.

4. Système d'assistance à la conduite selon l'une des revendications précédentes,
**caractérisé en ce que**
le signal d'alarme est développé de sorte qu'il est perçu par un conducteur regardant vers l'avant.

5. Système d'assistance à la conduite selon l'une des revendications précédentes,
**caractérisé en ce que**
le signal d'alarme présente une plus grande luminosité que le signal d'information.

6. Système d'assistance à la conduite selon l'une des revendications précédentes,
**caractérisé en ce que**
le moyen d'affichage présente une ou plusieurs diodes électroluminescentes (8, 9).

7. Système d'assistance à la conduite selon l'une des revendications précédentes,
**caractérisé en ce que**
le moyen d'affichage présente de préférence un affichage à éclairage LCD.

8. Système d'assistance à la conduite selon l'une des revendications précédentes,
**caractérisé en ce que**
le moyen d'affichage est un conduit de lumière.

9. Système d'assistance à la conduite selon l'une des revendications précédentes,
**caractérisé en ce que**
la luminosité et / ou le contraste et / ou la durée de commutation et / ou le contour du moyen d'affichage est / sont réglable (s).

10. Système d'assistance à la conduite selon l'une des revendications précédentes,
**caractérisé en ce que**
la luminosité du moyen d'affichage est réglable au moyen d'une modulation d'impulsions en largeur.

11. Système d'assistance à la conduite selon l'une des revendications précédentes,
**caractérisé en ce que**
le moyen d'affichage pour la commande du contour de l'affichage n'est éclairé que partiellement.

12. Système d'assistance à la conduite selon l'une des revendications précédentes,
**caractérisé en ce que**
la luminosité du moyen d'affichage est réglable en fonction de la luminosité ambiante
détectée par un capteur (12).

13. Système d'assistance à la conduite selon l'une des revendications précédentes,
**caractérisé en ce que**
le capteur (12) pour la détection de la luminosité ambiante est un capteur de pluie ou un capteur de luminosité pour l'éclairage du combiné.

14. Système d'assistance à la conduite selon l'une des revendications précédentes,
**caractérisé en ce**
**qu'**il est prévu des moyens pour la détection de la position d'assise du conducteur et que la luminosité du moyen d'affichage est réglable en fonction de la position détectée.

15. Système d'assistance à la conduite selon l'une des revendications précédentes,
**caractérisé en ce**
**qu'**il est prévu des moyens pour la détection de la position de la tête du conducteur et / ou du sens du regard du conducteur et que le moyen d'affichage est réglable en fonction de la position de la tête ou selon le cas du sens du regard détecté.

16. Système d'assistance à la conduite selon l'une des revendications précédentes,
**caractérisé en ce que**
le moyen d'affichage peut être allumé et / ou éteint en continu.

17. Système d'assistance à la conduite selon l'une des revendications précédentes,
**caractérisé en ce que**
le signal d'alarme est développé sous forme d'impulsion clignotante.

18. Système d'assistance à la conduite selon la revendication 17,
**caractérisé en ce que**
la première impulsion clignotante d'un signal d'alarme est plus claire que la seconde et le cas échéant que les autres impulsions clignotantes.

19. Système d'assistance à la conduite selon l'une des revendications précédentes,
**caractérisé en ce que**
la zone entourant le moyen d'affichage présente une couleur uniforme de préférence sombre.

20. Système d'assistance à la conduite selon l'une des revendications précédentes,
**caractérisé en ce que**
la luminosité du moyen d'affichage est réglable en fonction de la couleur de la peinture du véhicule.

21. Véhicule automobile,
**caractérisé en ce**
**qu'**il présente un système d'assistance à la conduite selon l'une des revendications précédentes.
